# EUROPEAN PATENT APPLICATION

(11) **EP 4 440 187 A1**
(43) Date of publication of application: **02.10.2024**
(21) Application number: 22911963.1
(22) Date of filing: 22.12.2022
(51) Int. Cl.: H04W 24/10, H04W 36/00, H04W 36/14

(54) **METHOD AND DEVICE FOR MAINTAINING SIGNALLING-BASED MDT IN INTER-RAT MOBILE COMMUNICATION**

(30) Priority: 22.12.2021 KR 20210185316
(71) Applicant: Samsung Electronics Co., Ltd., Suwon-si, Gyeonggi-do 16677 (KR)
(72) Inventor: KIM, Sangbum, Suwon-si, Gyeonggi-do 16677 (KR)
(74) Representative: Nederlandsch Octrooibureau
(86) International application number: PCT/KR2022/021042
(87) International publication number: WO 2023/121330

(57) **Abstract**

The present disclosure relates to a 5G or 6G communication system for supporting higher data transmission rates. A method and device disclosed herein can address the problem of signalling-based MDT override in inter-RAT cell reselection or inter-RAT handover.

## Description

### [Technical Field]

The disclosure relates to a method and device for maintaining signalling-based minimization of drive test (MDT) in a wireless communication system.

### [Background Art]

Fifth generation (5G) mobile communication technologies define broad frequency bands such that high transmission rates and new services are possible, and can be implemented not only in "Sub 6 gigahertz (GHz)" bands such as 3.5 GHz, but also in "Above 6 GHz" bands referred to as millimeter wave (mmWave) such as 28 GHz and 39 GHz. In addition, it has been considered to implement sixth generation (6G) mobile communication technologies, which is referred to as Beyond 5G systems, in terahertz (THz) bands (for example, 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive multi input multi output (MIMO) for mitigating radio-wave path loss and increasing radio-wave transmission distances in mmWave, supporting numerologies (operating multiple subcarrier spacings) for efficiently utilizing mmWave resources and dynamic operation of slot formats, initial access technologies for supporting multi-beam transmission and broadbands, definition and operation of Band-Width Part (BWP), new channel coding methods such as a Low Density Parity Check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, new radio (NR) user equipment (UE) Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, Integrated Access and Backhaul (IAB) for providing a node for network service area expansion by supporting a wireless backhaul link and an access link in an integrated manner, mobility enhancement including conditional handover and Dual Active Protocol Stack (DAPS) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, Mobile Edge Computing (MEC) for receiving services based on UE positions, and the like.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, drone communication, and the like.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS) technology, but also full-duplex technology for increasing frequency efficiency of 6G mobile communication technologies and improving system networks, Al-based communication technology for implementing system optimization by utilizing satellites and Artificial Intelligence (AI) from the design stage and internalizing end-to-end AI support functions, and next-generation distributed computing technology for implementing services at levels of complexity exceeding the limit of UE operation capability by utilizing ultra-high-performance communication and computing resources.

In case of building or optimizing a network, a mobile communication service provider needs to measure the signal strength of the service area and arrange or reallocate base stations. In this case, the service provider can collect cell measurement information in the service area through a vehicle, and this can be referred to as a drive test. However, drive tests are expensive to operate and cannot be used to verify indoor coverage. Therefore, MDT is being proposed to collect cell measurement information using terminals within the service area.

### [Disclosure of Invention]

### [Technical Problem]

Based on the discussion described above, the disclosure provides a method and device for maintaining signalling-based MDT in inter-radio access technology (RAT) handover.

In addition, the disclosure provides a UE-assisted method and device for maintaining signalling-based MDT in inter-RAT handover.

In addition, the disclosure provides a network-based method and device for maintaining signalling-based MDT in inter-RAT handover.

In addition, the disclosure provides a method and device for maintaining signalling-based MDT based on RAT priority in inter-RAT handover.

### [Solution to Problem]

A method of a terminal in a communication system according to an embodiment of the disclosure may comprise receiving, from a first base station associated with a first radio access technology (RAT), logged measurement configuration information, wherein the logged measurement configuration information includes an indicator indicating signalling-based logged measurement; receiving a radio resource control (RRC) release message from the first base station; entering an RRC idle state or RRC inactive state based on the RRC release message; performing logging of measurement result during the RRC idle state or RRC inactive state, based on the logged measurement configuration information; performing cell reselection during the RRC idle state or RRC inactive state; performing an RRC connection procedure with a second base station in case where a cell of the second base station associated with a second RAT is selected according to the cell reselection; and transmitting an RRC message indicating completion of the RRC connection procedure to the second base station, wherein the RRC message may include an indicator associated to override protection of the signalling-based logged measurement.

A method of a base station in a communication system according to an embodiment of the disclosure may comprise performing a radio resource control (RRC) connection procedure with a terminal that has performed cell reselection; receiving, from the terminal, a RRC message indicating a completion of the RRC connection procedure, wherein the RRC message includes an indicator associated with override protection of signalling-based logged measurement configured by a first radio access technology (RAT); and determining whether to transmit logged measurement configuration information to the terminal based on the indicator, wherein the base station may be associated with a second RAT.

A terminal in a communication system according to an embodiment of the disclosure may comprise a transceiver; and a controller coupled with the transceiver, wherein the controller may be configured to receive, from a first base station associated with a first radio access technology (RAT), logged measurement configuration information, wherein the logged measurement configuration information includes an indicator indicating signalling-based logged measurement, receive a radio resource control (RRC) release message from the first base station, enter an RRC idle state or RRC inactive state based on the RRC release message, perform logging of measurement result during the RRC idle state or RRC inactive state, based on the logged measurement configuration information, perform cell reselection during the RRC idle state or RRC inactive state, performing an RRC connection procedure with a second base station in case where a cell of the second base station associated with a second RAT is selected according to the cell reselection, and transmitting an RRC message indicating completion of the RRC connection procedure to the second base station, wherein the RRC message may include an indicator associated to override protection of the signalling-based logged measurement.

A base station in a communication system according to an embodiment of the disclosure may comprise a transceiver; and a controller coupled with the transceiver, wherein the controller may be configured to perform a radio resource control (RRC) connection procedure with a terminal that has performed cell reselection, receive, from the terminal, a RRC message indicating a completion of the RRC connection procedure, wherein the RRC message includes an indicator associated with override protection of signalling-based logged measurement configured by a first radio access technology (RAT), and determine whether to transmit logged measurement configuration information to the terminal based on the indicator, wherein the base station may be associated with a second RAT.

### [Advantageous Effects]

According to an embodiment of the disclosure, signalling-based MDT can be maintained in inter-RAT cell reselection or inter-RAT handover.

In addition, according to an embodiment of the disclosure, signalling-based MDT can be maintained based on a UE-assisted method in inter-RAT cell reselection or inter-RAT handover.

In addition, according to an embodiment of the disclosure, signalling-based MDT can be maintained based on a network-based method in inter-RAT handover.

In addition, according to an embodiment of the disclosure, signalling-based MDT can be maintained based on RAT priority.

Accordingly, this can solve the override problem of signalling-based MDT in inter-RAT mobile communication.

The effects that can be obtained from the disclosure are not limited to the effects mentioned above, and other effects not mentioned can be clearly understood by those skilled in the art from the description below.

### [Description of Drawings]

In order to more clearly explain the technical solutions of the embodiments proposed in the disclosure, drawings of the embodiments will be briefly introduced. The following drawings only refer to embodiments of the disclosure and do not limit the disclosure.
FIG. 1 is a diagram of a structure of a next generation mobile communication system according an embodiment of the disclosure.
FIG. 2 is a diagram for describing a transition of a radio access state in a next generation mobile communication system, according an embodiment of the disclosure.
FIG. 3 is a diagram for describing a technology for collecting and reporting cell measurement information according to an embodiment of the disclosure.
FIG. 4 is a diagram illustrating a method for collecting and reporting cell measurement information according to an embodiment of the disclosure.
FIG. 5 is a flowchart of an operation for collecting and reporting cell measurement information according to an embodiment of the disclosure.
FIG. 6 is a diagram for describing a process for reconfiguring Logged MDT according to an embodiment of the disclosure.
FIG. 7 is a diagram for describing a method for preventing signalling-based MDT operation from being interrupted in inter-RAT cell reselection according to an embodiment of the disclosure.
FIG. 8 is a flowchart of a process for preventing signalling-based MDT operation from being interrupted in inter-RAT cell reselection according to an embodiment of the disclosure.
FIG. 9 is a flowchart of a UE operation to prevent signalling-based MDT operation from being interrupted in inter-RAT cell reselection according to an embodiment of the disclosure.
FIG. 10 is a flowchart of a base station operation to prevent signalling-based MDT operation from being interrupted in inter-RAT cell reselection according to an embodiment of the disclosure.
FIG. 11 is a diagram for describing a method for preventing signalling-based MDT operation from being interrupted in inter-RAT handover according to an embodiment of the disclosure.
FIG. 12 is a flowchart of a process for preventing signalling-based MDT operation from being interrupted in inter-RAT handover according to an embodiment of the disclosure.
FIG. 13 is a flowchart of a UE operation to prevent signalling-based MDT operation from being interrupted in inter-RAT handover according to an embodiment of the disclosure.
FIG. 14 is a flowchart of a base station operation to prevent signalling-based MDT operation from being interrupted in inter-RAT handover according to an embodiment of the disclosure.
FIG. 15 is a block diagram illustrating a structure of a terminal according to an embodiment of the disclosure.
FIG. 16 is a block diagram illustrating a structure of a base station according to an embodiment of the disclosure.

### [Mode for the Invention]

Hereinafter, embodiments of the disclosure will be described with reference to accompanying drawings.

In describing the embodiments, descriptions of technical contents that are well known in the technical field to which the disclosure belongs and are not directly related to the disclosure will be omitted.

By omitting the unnecessary description, the gist of the disclosure may be more clearly conveyed without obscuring the subject matter.

For the same reason, in the accompanying drawings, some elements may be exaggerated, omitted, or schematically illustrated. Further, the size of each element does not completely reflect the actual size. In each drawing, identical or corresponding elements are provided with identical reference numerals.

The advantages and features of the disclosure and ways to achieve them will be apparent by making reference to embodiments as described below in detail in conjunction with the accompanying drawings.

However, the disclosure is not limited to the embodiments set forth below, but may be implemented in various different forms. The embodiments are provided only to completely disclose the disclosure and inform those skilled in the art of the scope of the disclosure, and the disclosure is defined only by the scope of the appended claims. Throughout the specification, the same or like reference numerals designate the same or like elements.

Here, it will be understood that combinations of blocks in flowcharts or process flow diagrams may be performed by computer program instructions. Because these computer program instructions may be loaded into a processor of a general purpose computer, a special purpose computer, or another programmable data processing apparatus, the instructions, which are performed by a processor of a computer or another programmable data processing apparatus, create units for performing functions described in the flowchart block(s). The computer program instructions may be stored in a computer-usable or computer-readable memory capable of directing a computer or another programmable data processing apparatus to implement a function in a particular manner, and thus the instructions stored in the computer-usable or computer-readable memory may also be capable of producing manufacturing items containing instruction units for performing the functions described in the flowchart block(s). The computer program instructions may also be loaded into a computer or another programmable data processing apparatus, and thus, instructions for operating the computer or the other programmable data processing apparatus by generating a computer-executed process when a series of operations are performed in the computer or the other programmable data processing apparatus may provide operations for performing the functions described in the flowchart block(s).

In addition, each block may represent a portion of a module, segment, or code that includes one or more executable instructions for executing specified logical function(s). It should also be noted that in some alternative implementations, functions mentioned in blocks may occur out of order. For example, two blocks illustrated successively may actually be executed substantially concurrently, or the blocks may sometimes be performed in a reverse order according to the corresponding function.

Here, the term "unit" used in the disclosure means a software component or hardware component such as FPGA or ASIC, and performs a specific function. However, the term "unit" is not limited to software or hardware. The "unit" may be formed so as to be in an addressable storage medium, or may be formed so as to operate one or more processors. Thus, for example, the term "unit" may refer to components such as software components, object-oriented software components, class components, and task components, and may include processes, functions, attributes, procedures, subroutines, segments of program code, drivers, firmware, micro codes, circuits, data, a database, data structures, tables, arrays, or variables. A function provided by the components and "units" may be associated with the smaller number of components and "units", or may be further divided into additional components and "units". Furthermore, the components and "units" may be embodied to reproduce one or more CPUs in a device or security multimedia card.

For ease of description, some of the terms or names defined in the 3rd generation partnership project (3GPP) standards (standards for 5G, NR, Long-term evolution (LTE), or similar systems) may be used. Also, terms and names that are newly defined in next-generation communication systems (e.g., 6G, Beyond 5G systems) to which the disclosure is applicable or used in existing communication systems may be used. The use of these terms, does not limit the disclosure by the terms and names, and the disclosure may be applied likewise to systems conforming to other standards, and modifications may be made thereto without departing from the technical spirit of the disclosure.

In addition, it will be understood that, in an embodiment of the disclosure, the singular forms such as "a/an" and "the" are intended to include the plural forms, unless the context clearly indicates otherwise.

In addition, in an embodiment of the disclosure, although the terms including an ordinal number such as first, second, etc. can be used for describing various components, the components are not restricted by the terms. The terms are used merely for the purpose of distinguishing one component from another component. For example, a first component could be named a second component, and similarly, a second component could be also named a first component without departing from the scope of the disclosure.

In addition, in an embodiment of the disclosure, the term "and/or" includes any of a plurality of associated stated items or a combination of a plurality of associated stated items.

In addition, the terms used in an embodiment of the disclosure are merely used to describe particular embodiments, and are not intended to limit the disclosure. The singular forms are intended to include the plural forms as well, unless the context clearly indicates otherwise. In the disclosure, the terms such as "include" and/or "have" may be construed to denote a certain characteristic, number, step, operation, element, component or a combination thereof, but may not be construed to exclude the existence of or a possibility of addition of one or more other characteristics, numbers, steps, operations, elements, components or combinations thereof.

In addition, in the disclosure, to determine whether a specific condition is satisfied or fulfilled, expressions such as "greater than" or "less than" are used by way of example but does not exclude the expression such as "greater than or equal to" or "less than or equal to". A condition defined with "greater than or equal to" may be replaced by "greater than", a condition defined with "less than or equal to" may be replaced by "less than", a condition defined with "greater than or less than" may be replaced by "greater than and less than or equal to".

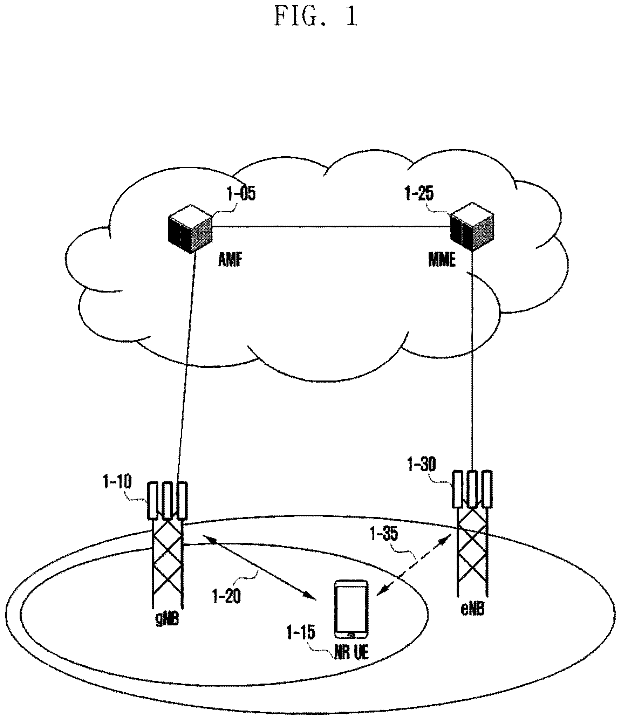

FIG. 1 is a diagram of a structure of a next generation mobile communication system according an embodiment of the disclosure.

With reference to FIG. 1, a wireless access network of the next generation mobile communication system (new radio (NR)) may include a next generation base station (new radio node B, hereinafter referred to as gNB) 1-10 and an access and mobility management function (AMF) (new radio core network) 1-05. A user equipment (new radio user equipment, hereinafter referred to as NR UE or UE) 1-15 may access an external network through the gNB 1-10 and the AMF 1-05.

In FIG. 1, the gNB may correspond to an evolved node B (eNB) of an existing LTE system. The gNB is connected to the NR UE via a wireless channel and may provide a service superior to an existing node B (1-20). In the next generation mobile communication system, because all user traffic is serviced via a shared channel, an apparatus that performs scheduling by gathering pieces of state information, such as information about buffer states, available transmit power states, channel states, etc. of UEs is required, and the gNB 1-10 may operate as such an apparatus. One gNB may generally control a plurality of cells. A bandwidth greater than the existing maximum bandwidth may be given to achieve ultra speed data transmission compared to the existing LTE system, and beamforming technology may be additionally added to wireless access technology such as orthogonal frequency division multiplexing (hereinafter referred to as OFDM). Also, an adaptive modulation & coding (hereinafter referred to as AMC) scheme in which a modulation scheme and a channel coding rate are determined according to a channel state of a UE may be applied. The AMF 1-05 may perform functions of supporting mobility, configuring a bearer, configuring QoS, etc. The AMF is an apparatus served to perform not only a mobility management function but also various control functions with respect to the UE, and may be connected to a plurality of base stations. In addition, the next generation mobile communication system may interoperate with the existing LTE system, and the AMF may be connected to a MME 1-25 via a network interface. The MME may be connected to eNB 1-30 that is an existing base station. A UE supporting LTE-NR dual connectivity may transmit or receive data while maintaining connection to not only the gNB but also the eNB (1-35).

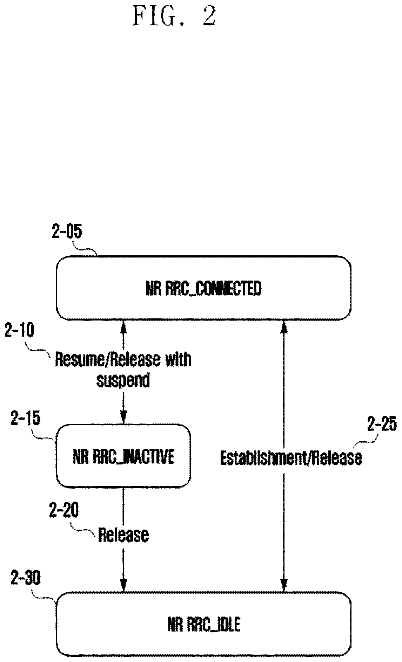

FIG. 2 is a diagram for describing a transition of a radio access state in a next generation mobile communication system, according an embodiment of the disclosure.

In the next generation mobile communication system, a UE may have three types of radio access states (RRC states). A connection mode (RRC_CONNECTED) 2-05 is a radio access state in which a UE is able to transmit or receive data. An idle mode (RRC_IDLE) 2-30 is a radio access mode in which a UE monitors whether a paging message is transmitted to the UE. These two modes are radio access states that are also applied to an existing LTE system, and detailed technologies are the same as those of the existing LTE system. In the next generation mobile communication system, an inactive radio access state (RRC_INACTIVE) 2-15 is newly defined. In the radio access state, UE context is maintained in a base station and a UE, and RAN-based paging may be supported. Features of the new radio access state are as follows.
- Cell re-selection mobility;
- CN-NR RAN connection (both C/U-planes) has been established for UE;
- The UE access stratum (AS) context is stored in at least one of gNB and the UE;
- Paging is initiated by NR RAN;
- RAN-based notification area is managed by NR RAN;
- NR RAN knows the RAN-based notification area which the UE belongs to;

The new INACTIVE radio access state may switch to a connected mode or an idle mode by using a specific procedure. An inactive mode is switched to a connected mode according to a resume process, and the connected mode is switched to the inactive mode using a release procedure including suspend configuration information (2-10). In above procedure, one or more RRC messages are transmitted or received between a UE and a base station, and one or more operations are included in the procedure.

Also, through the release procedure, the inactive mode may be switched to the idle mode (2-20). Meanwhile, the switching between the connected mode and the idle mode may follow the existing LTE technology. That is, the switching between the connected mode and the idle mode may be performed through an establishment or release procedure (2-25).

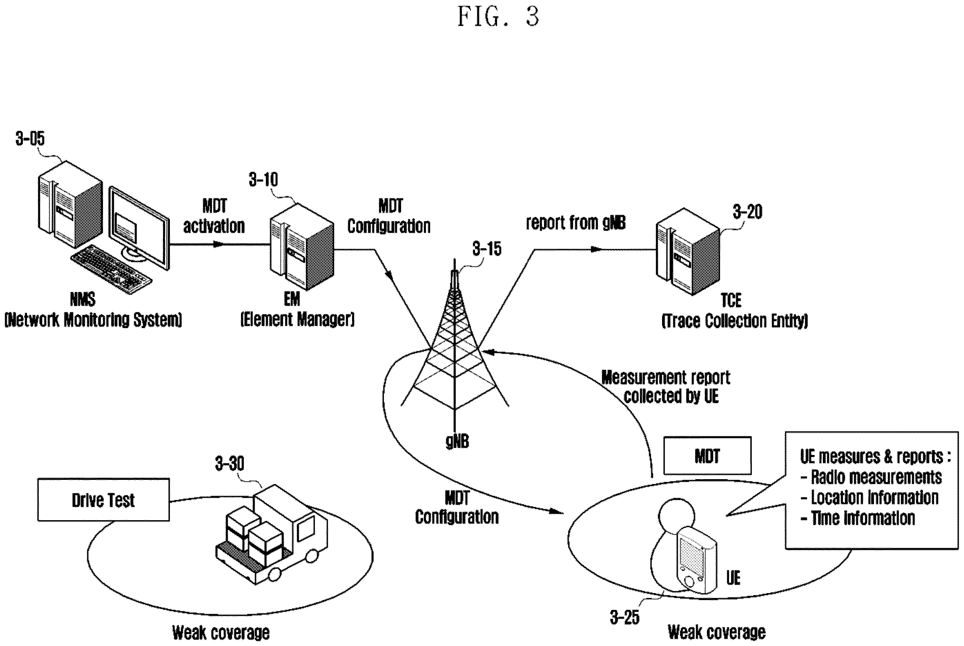

FIG. 3 is a diagram for describing a technology for collecting and reporting cell measurement information according to an embodiment of the disclosure.

At the time of network establishment or network optimization, a mobile communication service provider usually measures a signal strength in an expected service area and, based on the measured signal strength, arranges or re-allocates base stations in the service area. The service provider collects cell measurement information in the service area by carrying signal measurement equipment around in a vehicle, which is time-consuming and expensive. The above process is generally referred to as a drive test because a vehicle is used in the process. In order to support operations such as cell reselection, handover, or serving-cell addition at the time of moving between cells, the UE is equipped with a function of measuring a signal transmitted to a base station. Therefore, instead of the drive test, a UE in the service area can be utilized, which is called minimization of drive test (MDT). The service provider may configure MDT operation for specific UEs through various network elements, and the UEs may collect and store signal strength information from a serving cell and neighboring cells in a connected mode (RRC_Connected), idle mode (RRC_Idle), or inactive mode (RRC_Inactive). In addition to the signal strength information, the UEs store various information such as location information, time information, and signal quality information. The stored information may be reported to the network when the UEs are in a connected mode, and the information reported to the network is transferred to a specific server.

In the disclosure, the MDT operation is broadly classified into immediate MDT and logged MDT.

The immediate MDT may refer to an MDT operation in which the collected information is immediately reported to the network. Since the collected information needs to be reported immediately, only a UE in the connected mode may perform the immediate MDT. A radio resource management (RRM) measurement process for supporting operations such as handover and serving-cell addition, is reused, and location information, time information, etc. may be additionally reported.

The logged MDT may refer to an MDT operation in which the information collected by the UE is stored without being immediately reported to a network, and then the stored information is reported to the network after the UE switches to the connected mode. The logged MDT operation is normally performed by a UE in an idle mode that cannot immediately report the collected information to the network. Meanwhile, a UE, which is in an inactive mode, introduced in a next-generation mobile communication system performs the logged MDT operation. When a specific UE is in a connected mode, the network provides, to the UE, configuration information for performing a logged MDT operation, and the UE may collect and store information according to the configuration information after switching to the idle mode or inactive mode.

The MDT operation may be summarized in Table 1 below according to the UE's radio access state.

**[Table 1]**

| | Radio access state(RRC state) |
|---|---|
| Immediate MDT | RRC_Connected |
| Logged MDT | RRC_Idle, RRC_Inactive |

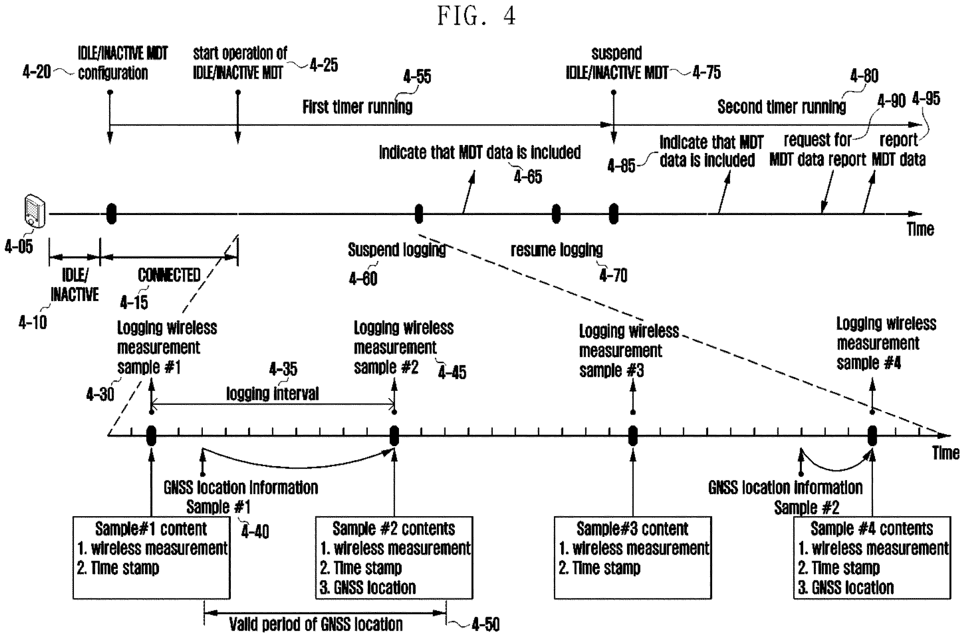

FIG. 4 is a diagram illustrating a method for collecting and reporting cell measurement information according to an embodiment of the disclosure.

A UE 4-05 may switch from an idle mode or inactive mode 4-10 to a connected mode 4-15. In the connected mode, the UE may collect MDT data and report the collected MDT data to a base station through an immediate MDT operation. The UE, which is switched to the connected mode, may receive logged MDT configuration information performed in the idle mode or inactive mode from the base station (4-20). The logged MDT configuration information is included in an RRC message, is transmitted to the UE. The UE, having received the message, runs a first timer (4-55). The UE may perform the logged MDT operation in an idle mode or inactive mode period until the first timer expires. The value of the first timer may be included in the logged MDT configuration information. If the UE switches to the idle mode or inactive mode, the logged MDT may be performed according to the received logged MDT configuration information (4-25). The UE may store certain information collected every configured period, for example, every logging interval 4-35 (4-30, 4-45). In addition, if valid location information 4-40 is collected, the UE may also store the location information. The validity of location information may be based on whether the validity period has elapsed. For example, the location information may be determined to be valid if a predetermined time 4-50 has not passed since the location information was collected by the UE. The predetermined time corresponding to a valid time may be equal to or shorter than the logged interval. Even before the first timer has yet expired, the UE may temporarily stop the logged MDT operation that is being performed at the time of switching to the connected mode (4-60). However, the first timer does not stop running but continues to run even in the connected mode section. That is, the first timer continues to run regardless of the RRC state change. However, when MDT data is not stored any longer because there is insufficient UE memory to store the MDT data, or when the logged MDT configuration information is released, the first timer may be stopped. The logged MDT configuration information may be released in the case in which other logged MDT configuration information is provided in a serving RAT or another RAT or in the case in which the UE is detached or power is disconnected. The UE may report (or indicate) to the base station that the UE itself includes the stored collected information (MDT data) using an RRC setup complete message or RRC resume complete message during a connection establishment process (RRC connection establishment) or connection resume process (RRC connection resume) (4-65).

In the disclosure, the connection establishment process may refer to a process in which the UE switches from the idle mode to the connected mode. For example, the connection establishment process may include three steps, and three types of RRC message may be used in the process.
- Step 1: a UE transmits an RRC setup request message to a base station
- Step 2: a base station transmits an RRC setup message to a UE
- Step 3: a UE transmits an RRC setup complete message to a base station

In the disclosure, the connection resume process may refer to a process in which the UE switches from the inactive mode to the connected mode. For example, the connection resume process may include three steps, and three types of RRC messages may be used in the process.
- Step 1: a UE transmits an RRC resume request message to a base station
- Step 2: a base station transmits an RRC resume message to a UE
- Step 3: a UE transmits an RRC resume complete message to a base station

The UE may report information indicating that the UE includes the collected information to a target base station not only during the connection establishment process or the connection resume process, but also during a connection reestablishment process (RRC connection reestablishment) and a handover process. Meanwhile, if the logged MDT is configured but there is no collected and stored information yet, the UE may omit the report. Upon receipt of the report, the base station may request a report of MDT data stored in the UE as needed. The MDT data that has not been reported needs to be stored in the UE for a predetermined time. If the UE is switched back to the idle mode or inactive mode and the first timer has not yet expired, the UE may resume the logged MDT operation (4-70). If the first timer expires, the logged MDT operation may be stopped (4-75). The UE, having stopped the logged MDT operation, may run a second timer (4-80) and maintain the MDT data stored until the second timer expires. After the second timer expires, whether to delete the stored MDT data may be determined by the UE implementation. The value of the second timer is not included in or configured for the logged MDT configuration information, and a predefined value may be applied. When the UE is switched back to the connected mode, the UE may report to the base station that the UE itself includes the stored collected information (MDT data) (4-85). The base station may request to the UE a report of MDT data, which is being stored by the UE, using a predetermined RRC message (4-90). Accordingly, the UE may include the MDT data, which is being stored, in a predetermined RRC message and report (or transmit) the RRC message including the MDT data to the base station (4-95).

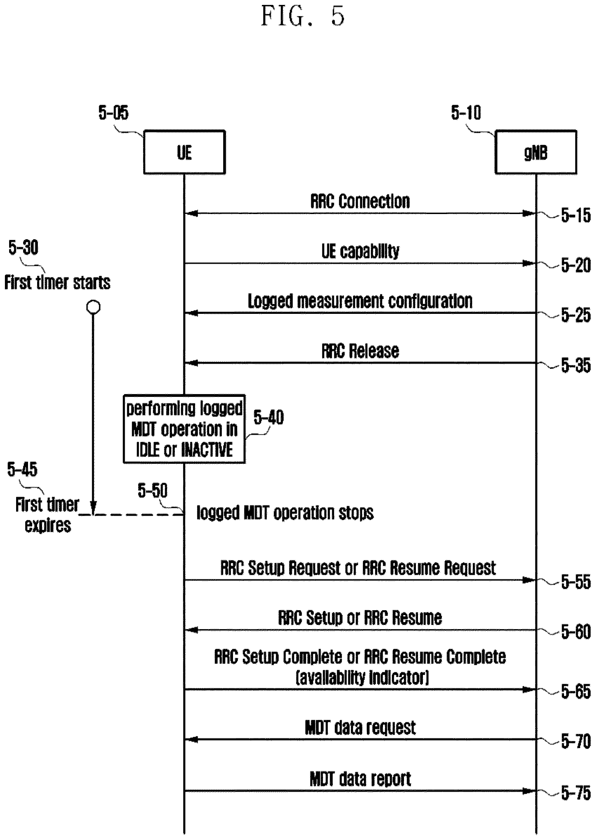

FIG. 5 is a flowchart of an operation for collecting and reporting cell measurement information according to an embodiment of the disclosure.

A UE 5-05 may establish a connection with a base station 5-10 (5-15). The UE may provide UE capability information to the base station (5-20), and may indicate whether the UE itself supports MDT operation and a frequency that may be measured. The base station may store, in a predetermined RRC message, configuration information required to perform the logged MDT operation, and transmit the RRC message to the UE (5-25). In one example, the configuration information may include at least one of the following pieces of information.
- Trace reference information
- Trace recording session reference information
- Information about trace collection entity (TCE) ID: A base station transmits MDT data information, reported from a UE, to a data server designated by the TCE ID.
- Absolute time information: An absolute time in a cell that currently provides logged MDT configuration information.
- Area configuration: Area information capable of collecting and storing measurement information through the logged MDT operation, indicated in units of cells. In addition, the area configuration may include RAT information that has to collect measurement information. A list included in the RAT information may be a blacklist or a whitelist. If the list is a blacklist, cell measurement information may be collected for RATs that are not included in the list. If the list is a whitelist, cell measurement information may not be collected for RATs that are not included in the list.
- Logging duration: A value of the first timer. When the first timer is running, a logged MDT operation may be performed in an idle mode or inactive mode
- Logging interval: A period at which the collected information is stored.
- plmn-IdentityList(that is, MDT PLMN list): PLMN list information. plmn-IdentityList may receive PLMN information capable of reporting whether to store MDT data and reporting the MDT data, as well as performing the logged MDT operation.
- An indicator indicating whether the logged MDT operation is performed in an idle mode, an inactive mode, or both modes: The RRC state for performing the logged MDT operation may be indicated using the indicator, or it may be defined that the logged MDT operation is always performed in the idle mode and the inactive mode without the indicator. The UE may perform the logged MDT operation only in the RRC state indicated by the indicator.
- An indicator indicating whether to collect and store beam-level measurement information: In the next-generation mobile communication system, a beam antenna may be applied. Without the indicator, it may be defined that beam-level measurement is always collected and stored for the frequency in which a beam-based operation is performed.
- Information on the maximum number of beams that is collected or stored, and information on the minimum signal strength of stored beams: A UE may omit storing information about beams weaker than the minimum signal strength. If all of the beams are weaker than the configured minimum signal value, the UE may store one piece of information of the single beam having the strongest signal strength, or may include an indicator indicating that all of the beams are weaker than the configured minimum signal value.
- An indicator indicating whether an MDT retrieval operation may be triggered in two step resume process (RRC resume).

Upon receiving the logged MDT configuration information, the UE may run the first timer (5-30).

The first timer may be referred to as T330. The value of the first timer may be configured as equal to the value of the logging duration. The base station may switch the UE to an idle mode or inactive mode through the RRC release message (5-35). Depending on the RRC state to which the UE is switched, the RRC release message may include configuration information for operation in the RRC state. If the first timer is running, the UE may perform the logged MDT in an idle mode or inactive mode (5-40). The UE may measure the signal strengths of a serving cell and neighboring cells, and acquire location information thereof. If beam-level measurement is configured, the signal strength values for beams having a value larger than the configured minimum value may be collected and stored in a serving cell and adjacent cell. The maximum number of beams that may be stored is configured or predefined. Meanwhile, the signal strength may refer to reference signal received power (RSRP), reference signal received quality (RSRQ), or signal to interference plus noise ratio (SINR). The UE may store the collected information at each logged interval period. When the first timer expires (5-45), the UE may stop the logged MDT operation (5-50).

In case where the UE enters the idle mode or inactive mode through the RRC release message and receives radio access network (RAN) or core network (CN) paging from a base station, or in case where mobile originated (MO) data transmission is activated, the UE may initialize an establishment process or resume process for switching from the idle mode or inactive mode to the connected mode.

The establishment process or resume process may include the followings.
- Step 1: a UE transmits an RRC setup request message or RRC resume request message to a base station (5-55).
- Step 2: a base station transmits an RRC setup message or RRC resume message to a UE (5-60).
- Step 3: a UE transmits an RRC setup complete message or RRC resume complete message to a base station (5-65).

The UE may include an indicator indicating that MDT data, stored by the UE itself, is included in the RRC setup complete message or RRC resume complete message. The base station, which has received the RRC setup complete message, may request reporting of the MDT data, as needed, using a predetermined RRC message (for example, UEInformationRequest message) (5-70). The UE, has received the MDT data report request, may report the MDT data using a predetermined RRC message (for example, UEInformationResponse message) (5-75).

In FIG. 5, operations 5-15 to 5-75 are illustrated to be performed in order, but the disclosure is not limited thereto. For example, some of operations 5-15 to 5-75 may be omitted and may be performed in parallel.

In the disclosure, a general handover operation is characterized in that a UE immediately performs a handover operation when it receives configuration information indicating handover performance from a base station. On the other hand, a condition-based handover operation is characterized in that when the UE receives configuration information indicating handover performance from the base station, the UE does not immediately perform the handover operation, but performs the handover operation when a predetermined condition is satisfied. Because of this, the condition-based handover operation may be referred to as conditional handover (CHO). Because the UE may quickly identify changes in channel quality state, it is advantageous to determine when the UE starts a handover operation to minimize the probability of handover failure. Therefore, compared to the general handover, the condition-based handover may be considered a more advanced technology. In the general handover, only one target cell is considered, whereas in the condition-based handover, one or more target cells may be considered. The number of target cells considered in the condition-based handover may be determined by a network.

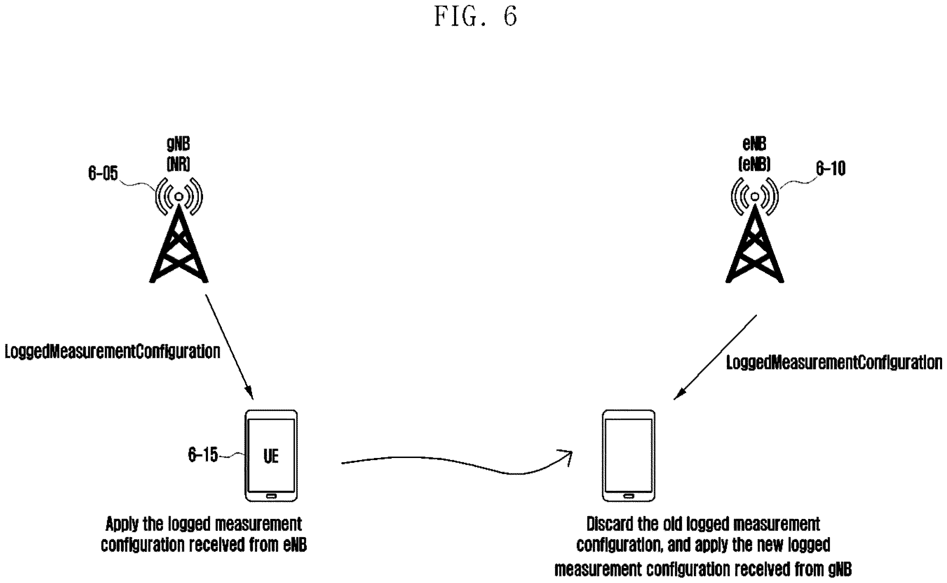

FIG. 6 is a diagram for describing a process for reconfiguring Logged MDT according to an embodiment of the disclosure.

MDT is classified as management-based MDT and signalling-based MDT, depending on whether a UE from which information is to be collected is specified. The definitions of management-based MDT and signalling-based MDT may be as follows.

### Management-based MDT

MDT data is collected from a UE in a specified area. The area is defined as a list of cells (UTRAN or E-UTRAN) or as a list of tracking/routing/location areas. The management-based MDT is an enhancement of the management-based trace functionality. Management-based MDT may be either a logged MDT or immediate MDT. (MDT data is collected from UEs in a specified area. The area is defined as a list of cells (UTRAN or E-UTRAN) or as a list of tracking/routing/location areas. The management based MDT is an enhancement of the management based trace functionality. Management based MDT can be either a logged MDT or Immediate MDT.)

### Signalling-based MDT

MDT data is collected from one specific UE. A UE that is participating in the MDT data collection is specified as IMEI(SV) or as IMSI. The signal-based MDT is an enhancement of the signalling-based subscriber and equipment trace. A signalling-based MDT may be either a logged MDT or Immediate MDT. (MDT data is collected from one specific UE. The UE that is participating in the MDT data collection is specified as IMEI(SV) or as IMSI. The signalling based MDT is an enhancement of the signalling based subscriber and equipment trace. A signalling based MDT can be either a logged MDT or Immediate MDT.)

That is, in the management-based MDT, an MDT operation is configured to UEs in a specific area to identify radio situation in the specific area, and in the signalling-based MDT, an MDT operation is configured to a specific UE.

In conventional standard technology, when an MDT operation is configured for a UE, the UE cannot know whether the corresponding operation is associated with the management-based MDT or signalling-based MDT. When the UE 6-15 has valid MDT configuration information provided by a first base station 6-05 or stores MDT measurement information that has not yet been reported according to the MDT configuration, if the UE 6-15 receives new MDT configuration information from a second base station 6-10, the UE 6-15 deletes all existing MDT configuration information and collected MDT measurement information and applies the new MDT configuration information. The first base station and second base station may belong to the same or different types of RAT. In an inter-RAT scenario, the UE in an idle mode or inactive mode with MDT configured in a first RAT (e.g., LTE) may reselect cell to a second RAT (e.g., NR) while performing an MDT operation according to the MDT configuration. In this case, the UE may suspend the MDT operation being performed but does not delete the existing MDT configuration information. If the second RAT does not provide new MDT configuration information, in case where the UE returns to the first RAT, the UE may restart the suspended MDT operation. Meanwhile, in the disclosure, if the first RAT is LTE, the second RAT is considered NR, and if the first RAT is NR, the second RAT is considered LTE. However, this is for convenience of explanation, and the disclosure is not limited thereto.

According to the definitions described above, the signalling-based MDT configures the MDT operation for a specific UE. Therefore, it is not desirable that the MDT operation is reconfigured to a new (management-based) MDT operation until the configured signalling-based MDT is terminated. For example, the management-based MDT may be configured to another UE that is not performing the signalling-based MDT in a specific area of interest.

Therefore, the signalling-based MDT needs to be protected if at least one of the following predetermined protection conditions is satisfied. In the disclosure, this may be referred to as signalling based MDT override protection. However, the use of these terms does not limit the technical scope of the disclosure.
1) Signalling-based logged MDT is configured, and there are results (Signalling based Logged MDT is configured, and results are available)
2) Signalling-based logged MDT is configured, but there are no results. For example, either nothing has been saved so far or all previously saved results are retrieved (Signalling based Logged MDT is configured, but no results are available e.g. so far nothing stored, or all previously stored results retrieved)
3) Signalling-based logged MDT configuration is stopped (i.e., expiration of T330), but the UE has unretrieved results that are discarded when accepting new configuration (Signalling based Logged MDT configuration is stopped (i.e. the expiry of T330), but UE still has un-retrieved results that would be discarded upon accepting a new configuration)

The disclosure proposes a method for protecting a preconfigured signalling-based MDT when the above protection conditions are satisfied in an inter-RAT scenario. Some of the methods proposed by the disclosure (for example, excluding the priority granting method considering RAT) are also applicable to intra-RAT scenarios. Meanwhile, in the disclosure, a preconfigured management-based MDT may be allowed to be overridden by a newly configured signalling-based MDT or management-based MDT.

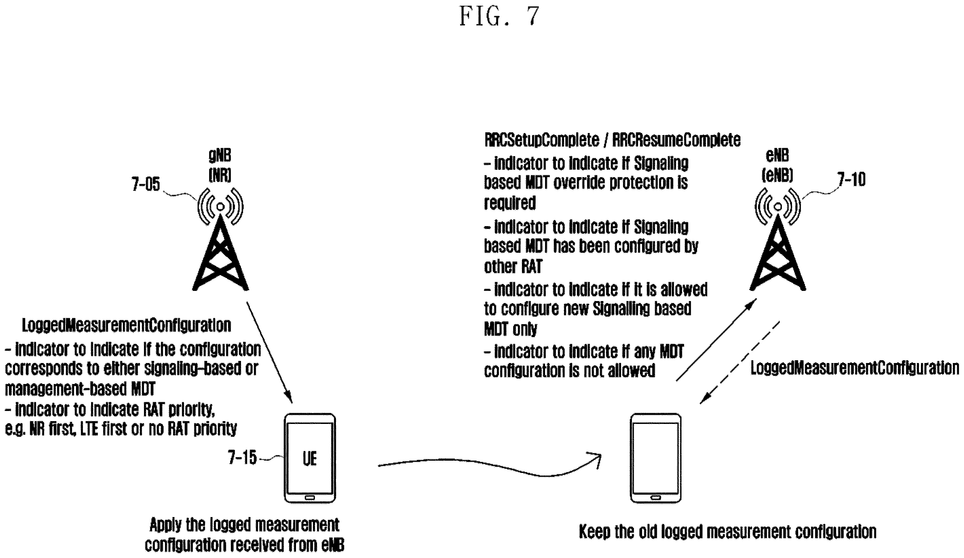

FIG. 7 is a diagram for describing a method for preventing signalling-based MDT operation from being interrupted in inter-RAT cell reselection according to an embodiment of the disclosure.

This embodiment proposes a method in which a UE receives a signalling-based MDT configuration from a first RAT (e.g., LTE), and then, moves to a second RAT (e.g., NR) (i.e., a case of reselecting an inter-RAT cell), the second RAT provides new MDT configuration information so that preconfigured signalling-based MDT is prevented from being interrupted (override). For this purpose, the following options may be considered. The network may also configure which of the following options to apply.
. First option: A preconfigured signalling-based MDT that satisfies at least one of the above protection conditions is always protected.

In the first option, MDT based on existing signalling is newly configured, or regardless of the type of RAT to which the UE is currently connected, if the preconfigured signalling-based MDT satisfies at least one of the above protection conditions, the preconfigured signalling-based MDT cannot be overridden.
. Second option: A preconfigured signalling-based MDT that satisfies at least one of the above protection conditions may be stopped by a new signalling-based MDT.

For example, the first RAT configures the signalling-based MDT for the UE, and the UE moves to the second RAT and connects to the second RAT. In this case, the second RAT may configure a new signalling-based MDT to the UE. In this case, the signalling-based MDT configured by the first RAT may be overridden. However, the second RAT may not configure the management-based MDT for the UE. That is, it may be allowed for the preconfigured signalling-based MDT to be overridden by the signalling-based MDT.
• Third option: A preconfigured signalling-based MDT that satisfies at least one of the above protection conditions may be suspended by the MDT configuration provided by the RAT with high priority.

Regarding MDT configuration authority, priority may be granted to a specific RAT. For example, collecting optimization-related information using MDT may be more important in the NR network currently under construction, than in the LTE network where the network construction and optimization process is already being completed. Accordingly, priority for MDT configuration is given to a specific RAT, and even if the RAT with low priority has already configured the signalling-based MDT, the RAT with high priority may configure a new MDT itself when necessary, so that the preconfigured signalling-based MDT may be overridden by the new signalling-based MDT. Meanwhile, priority information given to each RAT may be predefined or configured from the network. There may be several detailed methods in the above options. For example, the following methods may be considered.
- A RAT with high priority may override the signalling-based MDT (satisfying at least one of the above protection conditions) configured by a RAT with low priority, regardless of the type (signalling-based MDT or management-based MDT) of MDT that the RAT with high priority wants to configure.
- A RAT with high priority may override the signalling-based MDT (satisfying at least one of the above protection conditions) configured by a RAT with low priority only when the type of MDT the RAT with high priority wants to configure is the signalling-based MDT.

In this embodiment, when configuring a logged MDT, an indicator indicating whether the MDT is the signalling-based MDT and RAT priority information are provided together. Through the indicator, the UE may identify the type of logged MDT configured for it. Using the indicator and RAT priority information, when connected to another RAT cell or another cell, the UE may report to the other RAT cell or other cell whether the signalling-based MDT configured for it should be protected.

A first RAT base station 7-05 may provide logged MDT configuration information to a UE 7-15 through a predetermined message (e.g., LoggedMeasurementConfiguration message). Here, the message may include indicator information as follows, for example.
- An indicator indicating whether the logged MDT being configured is a signalling-based MDT.
- Priority information for each RAT for respect to MDT configuration. The priority information for each RAT is information that may be needed when a third option is applied if the priority for each RAT is not previously defined.

For example, the priority information for each RAT may indicate one of the following code values.
'NR First' - For MDT configuration, the NR has higher priority than other RATs
'LTE First' - For MDT configuration, the LTE has higher priority than other RATs
'No RAT Priority' - For MDT configuration, there is no priority for each RAT.

In case where the priority information is not signaled, the UE may assume that there is no priority for each RAT or that a predefined priority is applied.

The UE that has received the message runs a T330 timer, and until the timer expires, the UE may perform a logged MDT operation according to the provided configuration information when the UE is in an idle or inactive mode state. When the UE in the idle or inactive mode state reselects a cell of another RAT, the UE may suspend the logged MDT operation, and maintain the provided configuration information and collected MDT measurement results without deleting them. The UE may attempt to switch to the connected mode state by performing a configuration operation on the cell of the other RAT. The UE may include predetermined indicator information in a predetermined message (e.g., RRCSetupComplete (in NR) or RRCConnectionSetupComplete (in LTE)) during the establishment process. In this case, according to the considered option, the UE considers the signalling-based MDT indicator information and priority information for each RAT provided through a predetermined message (e.g., LoggedMeasurementConfiguration message), and may include at least one of the following predetermined indicator information in a predetermined message (RRCSetupComplete (in NR) or RRCConnectionSetupComplete (in LTE)). Meanwhile, if any of the following indicators are not included, the cell may transmit new MDT configuration information to the UE as in the prior art.
- Indicator to indicate if signalling-based MDT override protection is required (indicator to indicate if Signalling based MDT override protection is required)
- Indicator to indicate if signalling-based MDT has been configured by other RAT (indicator to indicate if Signalling based MDT has been configured by other RAT)
- Indicator to indicate if it is allowed to configure new signalling-based MDT (indicator to indicate if it is allowed to configure new Signalling based MDT only)
- Indicator to indicate if MDT configuration is not allowed (indicator to indicate if any MDT configuration is not allowed)

For example, it may be assumed that the UE is in the signalling-based MDT override protection state described above due to the signalling-based MDT preconfigured in another RAT.

In this case, if the first option is considered, the UE may include one of the following indicators in the predetermined RRC message.
- Indicator to indicate if signalling-based MDT override protection is required (indicator to indicate if Signalling based MDT override protection is required)
- Indicator to indicate if signalling-based MDT has been configured by other RAT (indicator to indicate if Signalling based MDT has been configured by other RAT)
- Indicator to indicate if MDT configuration is not allowed (indicator to indicate if any MDT configuration is not allowed)

Alternatively, if the second option is considered, the UE may include one of the following indicators in the predetermined RRC message.
- Indicator to indicate if it is allowed to configure new signalling-based MDT (indicator to indicate if it is allowed to configure new Signalling based MDT)

Alternatively, if the third option is considered, the UE may not transmit any indicator or include the following indicator in the predetermined RRC message if the RAT to be currently connected has a higher priority than the RAT that provided the preconfigured signalling-based MDT.
- Indicator to indicate if signalling-based MDT has been configured by other RAT (indicator to indicate if Signalling based MDT has been configured by other RAT)

Alternatively, if the RAT to be currently connected has a lower priority than the RAT that provided the preconfigured signalling-based MDT, the UE may include the following indicator.
- Indicator to indicate if signalling based MDT override protection is required (indicator to indicate if Signalling based MDT override protection is required)
- Indicator to indicate if signalling-based MDT has been configured by other RAT (indicator to indicate if Signalling based MDT has been configured by other RAT)
- Indicator to indicate if MDT configuration is not allowed (indicator to indicate if any MDT configuration is not allowed)

The base station that has received the predetermined message may determine whether the predetermined indicator information is included. If the indicator information is not included, the base station may provide new MDT configuration information to the UE. Alternatively, if the following indicator is included, the base station may configure a new signalling-based MDT to the UE.
- Indicator to indicate if it is allowed to configure new signalling-based MDT (indicator to indicate if it is allowed to configure new Signalling based MDT)

Meanwhile, if the following indicator is included, the base station may not provide new MDT configuration information to the UE.
- Indicator to indicate if signalling-based MDT override protection is required (indicator to indicate if Signalling based MDT override protection is required)
- Indicator to indicate if signalling-based MDT has been configured by other RAT (indicator to indicate if Signalling based MDT has been configured by other RAT)
- Indicator to indicate if MDT configuration is not allowed (indicator to indicate if any MDT configuration is not allowed)

The method described above is a UE-assisted method in that the UE reports necessary information to the network for signalling-based MDT override protection.

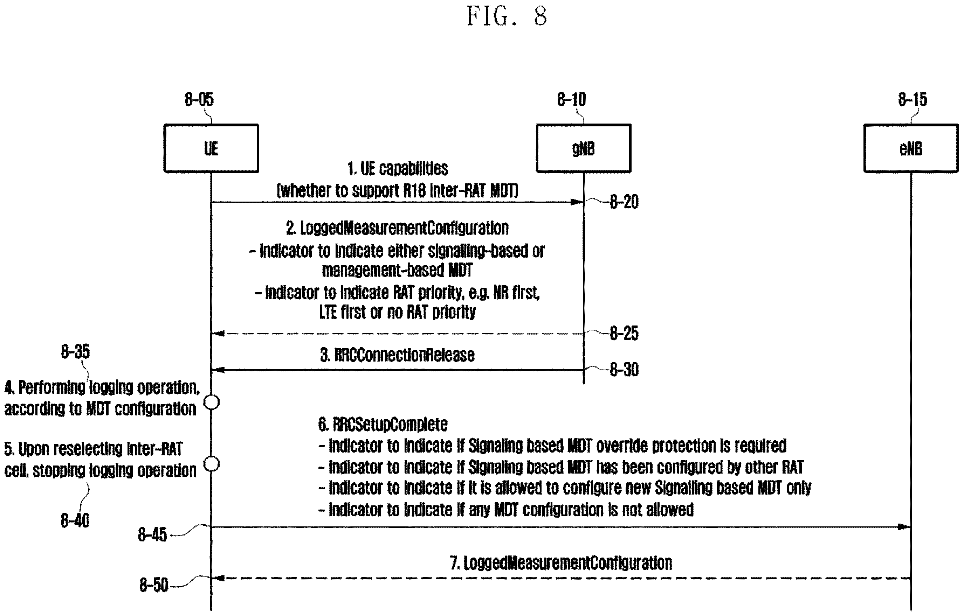

FIG. 8 is a flowchart of a process for preventing signalling-based MDT operation from being interrupted in inter-RAT cell reselection according to an embodiment of the disclosure.

The UE 8-05 may report its capability information to a first RAT base station 8-10 (8-20). The capability information may include an indicator indicating whether signalling-based MDT override protection is supported.

The first RAT base station may transmit a logged measurement configuration message (e.g., LoggedMeasurementConfiguration message) to the UE (8-25). The message is used to provide logged MDT configuration information to the UE. In addition, the logged measurement configuration message may include an indicator indicating whether the logged MDT to be configured is a signalling-based MDT and priority information for each RAT for MDT configuration.

The UE that has received the message may run a T330 timer and, when the UE is in an idle or inactive mode state until the timer expires, the UE may perform a logged MDT operation according to the provided MDT configuration information. The first RAT base station may transmit an RRC release message to the UE (8-30).

The UE that has received the RRC release message switches to the idle mode or inactive mode and may perform a logged MDT operation by applying the received logged MDT configuration information (8-35).

The UE may move and reselect the cell of the second RAT base station 8-15 (8-40). The UE that has moved to another RAT may maintain the preconfigured logged MDT configuration information and the collected MDT measurement information, but may temporarily suspend the logged MDT operation.

The UE may perform a configuration operation on the second RAT base station and transmit a predetermined RRC message including the following indicator information to the second RAT base station (8-45).
- Indicator to indicate if signalling-based MDT override protection is required (indicator to indicate if Signalling based MDT override protection is required)
- Indicator to indicate if signalling-based MDT has been configured by other RAT (indicator to indicate if Signalling based MDT has been configured by other RAT)
- Indicator to indicate if it is allowed to configure new signalling-based MDT (indicator to indicate if it is allowed to configure new Signalling based MDT only)
- Indicator to indicate if MDT configuration is not allowed (indicator to indicate if any MDT configuration is not allowed)

The second RAT base station that has received the message may decide whether to provide new MDT configuration information to the UE based on the indicator information (8-50).

In FIG. 8, operations 8-20 to 8-50 are illustrated to be performed in order, but the disclosure is not limited thereto. For example, some of operations 8-20 to 8-50 may be omitted and may be performed in parallel.

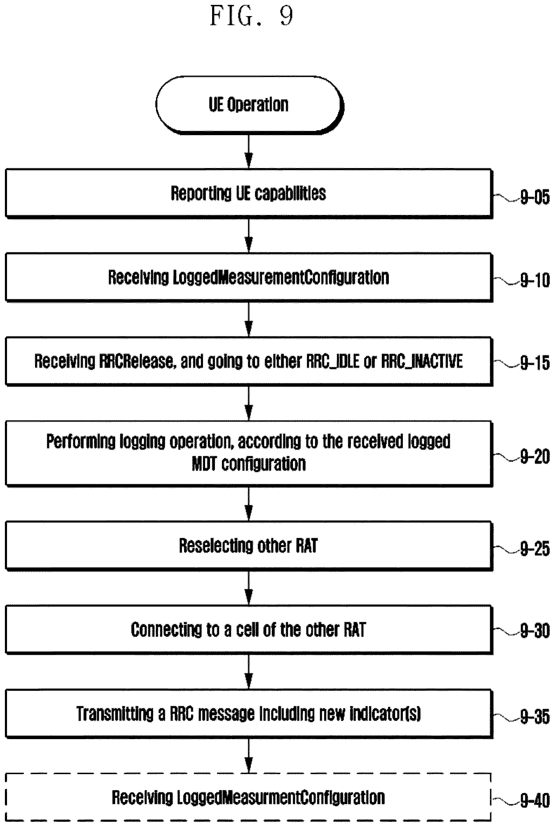

FIG. 9 is a flowchart of a UE operation to prevent signalling-based MDT operation from being interrupted in inter-RAT cell reselection according to an embodiment of the disclosure.

In operation 9-05, a UE may report its capability information to a first RAT base station. The capability information may include an indicator indicating whether signalling-based MDT override protection is supported.

In operation 9-10, the UE may receive a logged measurement configuration message (e.g., LoggedMeasurementConfiguration message) from the first RAT base station. The logged measurement configuration message may include an indicator indicating whether the logged MDT to be configured is a signalling-based MDT and priority information for each RAT for MDT configuration.

In operation 9-15, the UE may receive an RRC release message from the first RAT base station. The UE that has received the message switches to an idle mode or inactive mode.

In operation 9-20, the UE may perform the logged MDT operation by applying the received logged MDT configuration information.

In operation 9-25, the UE may reselect the cell of a second RAT base station.

In operation 9-30, the UE may perform a configuration operation on the second RAT base station.

In operation 9-35, the UE may transmit a predetermined RRC message including the following indicator information to the second RAT base station.
- Indicator to indicate if signalling-based MDT override protection is required (indicator to indicate if Signalling based MDT override protection is required)
- Indicator to indicate if signalling-based MDT has been configured by other RAT (indicator to indicate if Signalling based MDT has been configured by other RAT)
- Indicator to indicate if it is allowed to configure new signalling-based MDT (indicator to indicate if it is allowed to configure new Signalling based MDT only)
- Indicator indicating if MDT configuration is not allowed (indicator to indicate if any MDT configuration is not allowed)

In operation 9-40, the UE may receive new MDT configuration information from the second RAT base station.

In FIG. 9, operations 9-05 to 9-40 are illustrated to be performed in order, but the disclosure is not limited thereto. For example, some of operations 9-05 to 9-40 may be omitted and may be performed in parallel. Alternatively, depending on the indicator information transmitted by the UE to the second RAT base station in operations 9-35, operations 9-40 may be omitted.

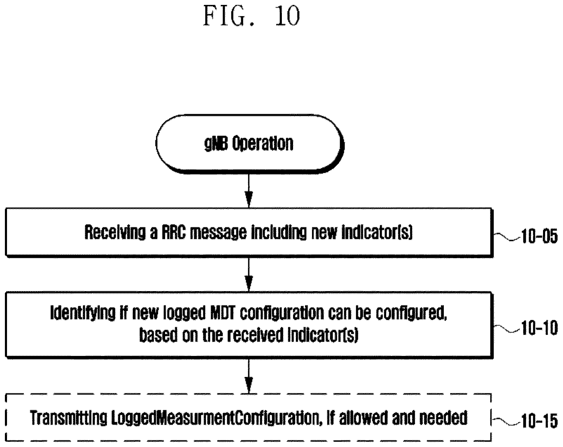

FIG. 10 is a flowchart of a base station operation to prevent signalling-based MDT operation from being interrupted in inter-RAT cell reselection according to an embodiment of the disclosure.

In operation 10-05, a base station may receive a predetermined RRC message including the following indicator information from a UE.
- Indicator to indicate if signalling-based MDT override protection is required (indicator to indicate if Signalling based MDT override protection is required)
- Indicator to indicate if signalling-based MDT has been configured by other RAT (indicator to indicate if Signalling based MDT has been configured by other RAT)
- Indicator to indicate if it is allowed to configure new signalling-based MDT (indicator to indicate if it is allowed to configure new Signalling based MDT only)
- Indicator to indicate if MDT configuration is not allowed (indicator to indicate if any MDT configuration is not allowed)

In operation 10-10, the base station may determine whether to provide new MDT configuration information to the UE based on the indicator information.

In operations 10-15, if new MDT configuration information may be provided, the base station may provide new MDT configuration information to the UE using a logged measurement configuration message (e.g., LoggedMeasurementConfiguration message).

In FIG. 10, operations 10-05 to 10-15 are illustrated to be performed in order, but the disclosure is not limited thereto. For example, some of operations 10-05 to 10-15 may be omitted and may be performed in parallel.

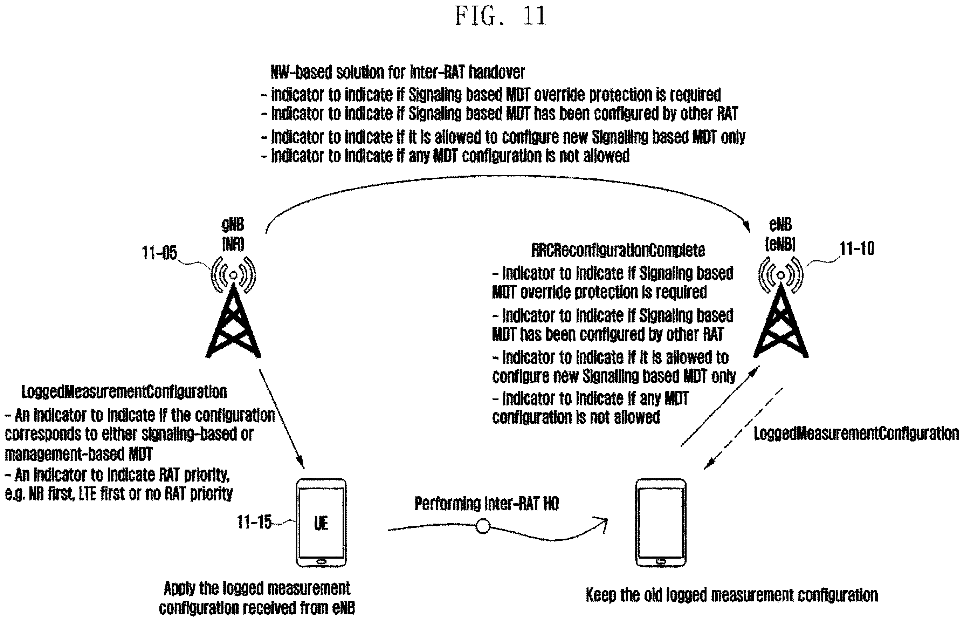

FIG. 11 is a diagram for describing a method for preventing signalling-based MDT operation from being interrupted in inter-RAT handover according to an embodiment of the disclosure.

This embodiment proposes a method in which in case where a UE receives signalling-based MDT configuration from a first RAT (e.g., LTE) and performs inter-RAT handover to a second RAT (e.g., NR), the second RAT provides new MDT configuration information to prevent the preconfigured signalling-based MDT from being interrupted (override). In case of inter-RAT handover, in addition to the previously described UE-assisted method, a network-based method may also be considered. Even in the case of inter-RAT handover, the options described above may be applied.

The UE-assisted method may be applied in the inter-RAT handover as follows.

A first RAT base station 11-05 may provide logged MDT configuration information to a UE 11-15 through a logged measurement configuration message (e.g., LoggedMeasurementConfiguration message). The logged measurement configuration message may include the following indicator information.
- An indicator indicating whether the logged MDT to be configured is a signalling-based MDT.
- Priority information for each RAT for MDT configuration. The priority information for each RAT is information that may be needed when the third option is applied if the priority for each RAT is not previously defined.

For example, the priority information for each RAT may indicate one of the following code values.
'NR First' - For MDT configuration, the NR has higher priority than other RATs
'LTE First' - For MDT configuration, the LTE has higher priority than other RATs
'No RAT Priority' - For MDT configuration, there is no priority for each RAT.

In case where the priority information is not signalled, the UE may assume that there is no priority for each RAT or that a predefined priority is applied.

The UE that has received the message runs a T330 timer, and until the timer expires, the UE may perform a logged MDT operation according to the provided configuration information when the UE is in an idle or inactive mode state. The first RAT base station may configure inter-RAT handover for the UE. The UE may perform the inter-RAT handover to a second RAT base station 11-10. The UE may include predetermined indicator information in a predetermined message (e.g., RRCReconfigurationComplete (in NR) or RRCConnectionReconfigurationComplete (in LTE)) during the inter-RAT handover process. In this case, according to the considered option, the UE considers whether the signalling-based MDT is indicated and the priority information for each RAT, provided through the logged measurement configuration message (e.g., LoggedMeasurementConfiguration message), and may include at least one piece of the following predetermined indicator information in a predetermined message (e.g., RRCReconfigurationComplete or RRCConnectionReconfiugrationComplete). Meanwhile, if any of the following indicators are not included, the cell may transmit new MDT configuration information to the UE as in the prior art.
- Indicator to indicate if signalling-based MDT override protection is required (indicator to indicate if Signalling based MDT override protection is required)
- Indicator to indicate if signalling-based MDT has been configured by other RAT (indicator to indicate if Signalling based MDT has been configured by other RAT)
- Indicator to indicate if it is allowed to configure new signalling-based MDT (indicator to indicate if it is allowed to configure new Signalling based MDT only)
- Indicator to indicate if MDT configuration is not allowed (indicator to indicate if any MDT configuration is not allowed)

For example, it may be assumed that the UE is in the signalling-based MDT override protection state described above due to the signalling-based MDT preconfigured in another RAT.

In this case, if the first option is considered, the UE may include one of the following indicators in the predetermined RRC message.
- Indicator to indicate if signalling-based MDT override protection is required (indicator to indicate if Signalling based MDT override protection is required)
- Indicator to indicate if signalling-based MDT has been configured by other RAT (indicator to indicate if Signalling based MDT has been configured by other RAT)
- Indicator to indicate if MDT configuration is not allowed (indicator to indicate if any MDT configuration is not allowed)

Alternatively, if the second option is considered, the UE may include one of the following indicators in the predetermined RRC message.
- Indicator to indicate if it is allowed to configure new signalling-based MDT (indicator to indicate if it is allowed to configure new Signalling based MDT)

Alternatively, if a third option is considered, the UE does not transmit any indicator or includes the following indicator in the predetermined RRC message if the RAT to be currently connected has a higher priority than the RAT that provided the preconfigured signalling-based MDT.
- Indicator to indicate if signalling-based MDT has been configured by other RAT (indicator to indicate if Signalling based MDT has been configured by other RAT)

Alternatively, the UE may include the following indicator if the RAT to be currently connected has a lower priority than the RAT that provided the preconfigured signalling-based MDT.
- Indicator to indicate if signalling-based MDT override protection is required (indicator to indicate if Signalling based MDT override protection is required)
- Indicator to indicate if signalling-based MDT has been configured by other RAT (indicator to indicate if Signalling based MDT has been configured by other RAT)
- Indicator to indicate if MDT configuration is not allowed (indicator to indicate if any MDT configuration is not allowed)

The base station that has received the predetermined message may determine whether the predetermined indicator information is included. If the indicator information is not included, the base station may provide new MDT configuration information to the UE. Alternatively, if the following indicator is included, the base station may configure a new signalling-based MDT to the UE.
- Indicator to indicate if it is allowed to configure new signalling-based MDT (indicator to indicate if it is allowed to configure new Signalling based MDT)

Meanwhile, if the following indicator is included, the base station may not provide new MDT configuration information to the UE.
- Indicator to indicate if signalling-based MDT override protection is required (indicator to indicate if Signalling based MDT override protection is required)
- Indicator to indicate if signalling-based MDT has been configured by other RAT (indicator to indicate if Signalling based MDT has been configured by other RAT)
- Indicator to indicate if MDT configuration is not allowed (indicator to indicate if any MDT configuration is not allowed)

A network-based method may be applied to the inter-RAT handover as follows.

In the network-based method, when coordinating inter-RAT handover, a first RAT base station may inform a second RAT base station that signalling-based MDT override protection is required for a corresponding UE.

The first RAT base station may determine that the inter-RAT handover to the second RAT base station is necessary based on the cell measurement information reported from the UE. The first RAT base station may transmit a handover preparation request message to the second RAT base station via a core network. If signalling-based MDT is preconfigured for the UE, the first RAT base station may include the following indicator in the handover preparation request message.
- Indicator to indicate if signalling-based MDT override protection is required (indicator to indicate if Signalling based MDT override protection is required)
- Indicator to indicate if signalling-based MDT has been configured by other RAT (indicator to indicate if Signalling based MDT has been configured by other RAT)
- Indicator to indicate if it is allowed to configure new signalling-based MDT (indicator to indicate if it is allowed to configure new Signalling based MDT only)
- Indicator to indicate if MDT configuration is not allowed (indicator to indicate if any MDT configuration is not allowed)

The second RAT base station that has received the predetermined message may decide whether to provide new MDT configuration information to the UE according to the predetermined indicator information.

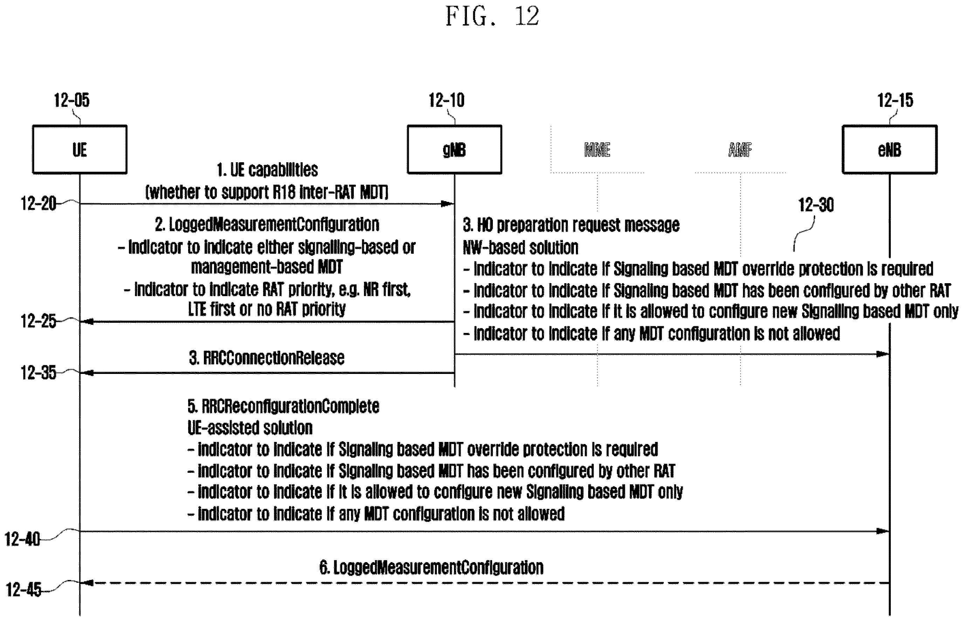

FIG. 12 is a flowchart of a process for preventing signalling-based MDT operation from being interrupted in inter-RAT handover according to an embodiment of the disclosure.

A UE 12-05 may report its capability information to a first RAT base station 12-10 (12-20). The capability information may include an indicator indicating whether inter-RAT handover and signalling-based MDT override protection are supported.

The first RAT base station may transmit a logged measurement configuration message (e.g., LoggedMeasurementConfiguration message) to the UE (12-25). The message is used to provide the logged MDT configuration information to the UE. Also, the logged measurement configuration message may include an indicator indicating whether the logged MDT to be configured is a signalling-based MDT and priority information for each RAT for MDT configuration.

The UE that has received the message may run a T330 timer and, until the timer expires, the UE may perform the logged MDT operation according to the provided configuration information when the UE is in an idle or inactive mode state.

The first RAT base station may determine that the inter-RAT handover to the second RAT base station is necessary based on the cell measurement information reported from the UE. The first RAT base station may transmit a handover preparation request message to the second RAT base station via the core network (12-30).

According to the network-based method, the first RAT base station may include the following predetermined indicator in the handover preparation request message.
- Indicator to indicate if signalling-based MDT override protection is required (indicator to indicate if Signalling based MDT override protection is required)
- Indicator to indicate if signalling-based MDT has been configured by other RAT (indicator to indicate if Signalling based MDT has been configured by other RAT)
- Indicator to indicate if it is allowed to configure new signalling-based MDT (indicator to indicate if it is allowed to configure new Signalling based MDT only)
- Indicator to indicate if MDT configuration is not allowed (indicator to indicate if any MDT configuration is not allowed)

The second RAT base station that has received the predetermined message may determine whether to provide new MDT configuration information to the UE according to the predetermined indicator information.

The second RAT base station that has received the handover preparation request message may transmit an HO command to the first RAT base station. The first RAT base station that has received the HO command may configure the inter-RAT handover for the UE (12-35).

The UE may perform the inter-RAT handover to the second RAT base station (12-15).

According to the UE-assisted method, the UE may include predetermined indicator information in a predetermined RRC message (e.g., RRCReconfigurationComplete) and transmit the same to the second RAT base station during the inter-RAT handover process (12-40). In this case, according to the considered option, the UE considers whether signalling-based MDT is indicated and the priority information for each RAT, provided through the logged measurement configuration message (e.g., LoggedMeasurementConfiguration message), and include at least one piece of the following predetermined indicator information in the RRC message.
- Indicator to indicate if signalling-based MDT override protection is required (indicator to indicate if Signalling based MDT override protection is required)
- Indicator to indicate if signalling-based MDT has been configured by other RAT (indicator to indicate if Signalling based MDT has been configured by other RAT)
- Indicator to indicate if it is allowed to configure new signalling-based MDT (indicator to indicate if it is allowed to configure new Signalling based MDT only)
- Indicator to indicate if MDT configuration is not allowed (indicator to indicate if any MDT configuration is not allowed)

The second RAT base station that has received the predetermined message may determine whether to provide new MDT configuration information to the UE according to the predetermined indicator information.

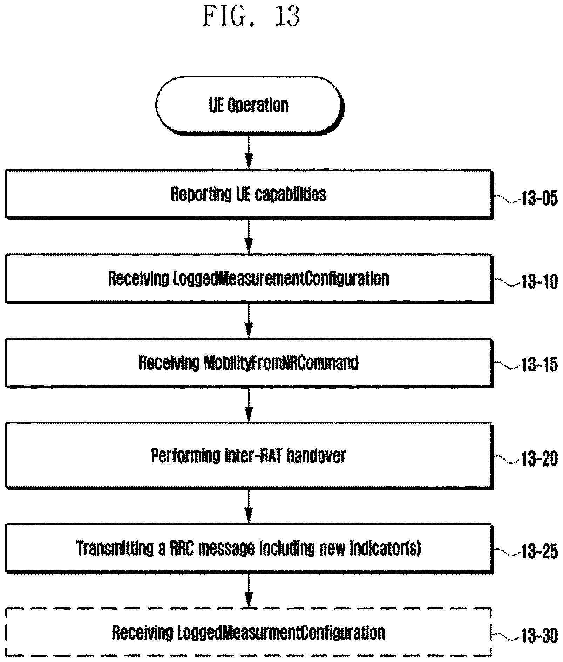

FIG. 13 is a flowchart of a UE operation to prevent signalling-based MDT operation from being interrupted in inter-RAT handover according to an embodiment of the disclosure.

In operation 13-05, a UE may report its capability information to a first RAT base station. The capability information may include an indicator indicating whether inter-RAT handover and signalling-based MDT override protection are supported.

In operation 13-10, the UE may receive a logged measurement configuration message (e.g., LoggedMeasurementConfiguration message) from the first RAT base station. The logged measurement configuration message may include an indicator indicating whether the logged MDT to be configured is a signalling-based MDT and priority information for each RAT for MDT configuration.

In operations 13-15, the UE may receive a handover-associated message (e.g., MobilityFromNRCommand message) from the first RAT base station.

In operations 13-20, the UE may perform the inter-RAT handover to the second RAT base station according to the HO command configuration information included in the message.

In operations 13-25, the UE may store the following predetermined indicator information in an RRC message (e.g., RRCReconfigurationComplete message) during the inter-RAT handover process and transmit the same to the second RAT base station.
- Indicator to indicate if signalling-based MDT override protection is required (indicator to indicate if Signalling based MDT override protection is required)
- Indicator to indicate if signalling-based MDT has been configured by other RAT (indicator to indicate if Signalling based MDT has been configured by other RAT)
- Indicator to indicate if it is allowed to configure new signalling-based MDT (indicator to indicate if it is allowed to configure new Signalling based MDT only)
- Indicator to indicate if MDT configuration is not allowed (indicator to indicate if any MDT configuration is not allowed)

In operations 13-30, the UE may receive new MDT configuration information from the second RAT base station.

In FIG. 13, operations 13-05 to 13-30 are illustrated to be performed in order, but the disclosure is not limited thereto. For example, some of operations 13-05 to 13-30 may be omitted and may be performed in parallel. Alternatively, depending on the indicator information transmitted by the UE to the second RAT base station in operations 13-25, operations 13-30 may be omitted.

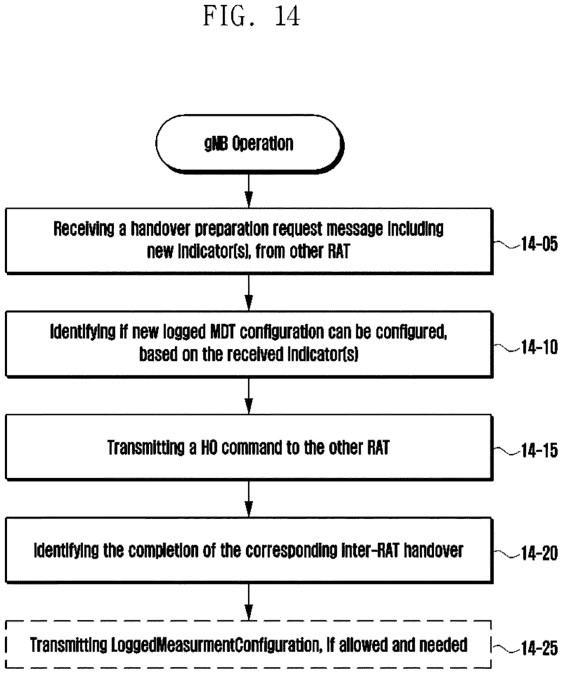

FIG. 14 is a flowchart of a base station operation to prevent signalling-based MDT operation from being interrupted in inter-RAT handover according to an embodiment of the disclosure.

In operation 14-05, a second RAT base station receives a handover preparation request message for one UE from a first RAT base station.

In operation 14-10, the second RAT base station may recognize that the handover preparation request message includes the following predetermined indicator.
- Indicator to indicate if signalling-based MDT override protection is required (indicator to indicate if Signalling based MDT override protection is required)
- Indicator to indicate if signalling-based MDT has been configured by other RAT (indicator to indicate if Signalling based MDT has been configured by other RAT)
- Indicator to indicate if it is allowed to configure new signalling-based MDT (indicator to indicate if it is allowed to configure new Signalling based MDT only)
- Indicator to indicate if MDT configuration is not allowed (indicator to indicate if any MDT configuration is not allowed)

In operations 14-15, the second RAT base station may transmit an HO command to the first RAT base station.

In operations 14-20, the second RAT base station may receive an RRC message (e.g., RRCReconfigurationComplete message) from the UE and identify that the inter-RAT handover has been successfully completed.

In operations 14-25, if the second RAT base station can provide new MDT configuration information to the UE, it may provide the new MDT configuration information to the UE using a logged measurement configuration message (e.g., LoggedMeasurementConfiguration message).

In FIG. 14, operations 14-05 to 14-25 are illustrated to be performed in order, but the disclosure is not limited thereto. For example, some of operations 14-05 to 14-25 may be omitted and may be performed in parallel.

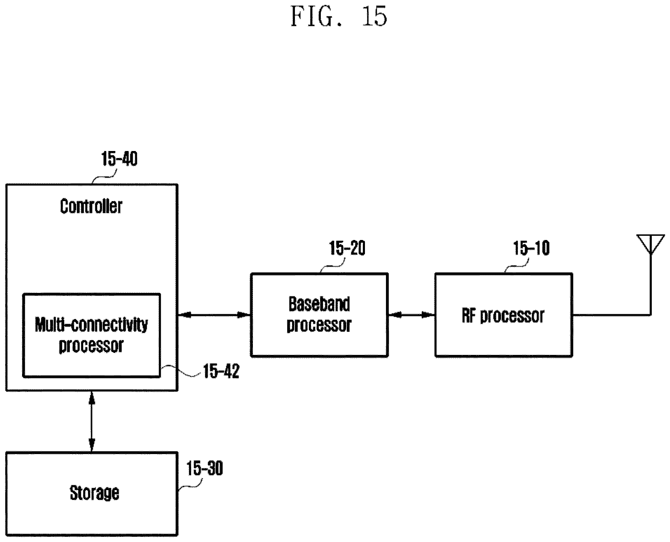

FIG. 15 is a block diagram illustrating a structure of a terminal according to an embodiment of the disclosure.

With reference to FIG. 15, the UE includes a radio frequency (RF) processor 15-10, a baseband processor 15-20, a storage 15-30, and a controller 15-40.

The RF processor 15-10 performs a function for transmitting or receiving a signal through a radio channel, such as band conversion and amplification of a signal. That is, the RF processor 15-10 up-converts a baseband signal provided from the baseband processor 15-20 into an RF band signal and transmits the same through an antenna, and down-converts an RF band signal, received through the antenna, to a baseband signal. For example, the RF processor 15-10 may include a transmission filter, a reception filter, an amplifier, a mixer, an oscillator, a digital to analog converter (DAC), an analog to digital converter (ADC), and the like. In the drawing, only one antenna is illustrated, but the UE may include a plurality of antennas. In addition, the RF processor 15-10 may include a plurality of RF chains. Moreover, the RF processor 15-10 may perform beamforming. In order to perform the beamforming, the RF processor 15-10 may control the phase and size of each signal transmitted or received through multiple antennas or antenna elements. In addition, the RF processor may perform MIMO operation, and may receive multiple layers in the case of performing MIMO operation.

The baseband processor 15-20 performs a function for conversion between a baseband signal and a bit stream according to the physical layer standard of the system. For example, if data transmission is performed, the baseband processor 15-20 generates complex symbols by encoding and modulating a transmission bit stream. In addition, if data reception is performed, the baseband processor 15-20 reconstructs the received bit string by demodulating and decoding the baseband signal provided from the RF processor 15-10. For example, in an orthogonal frequency division multiplexing (OFDM) scheme, if data transmission is performed, the baseband processor 15-20 generates complex symbols by encoding and modulating a transmission bit stream, maps the complex symbols to subcarriers, and then constitutes OFDM symbols through an inverse fast Fourier transform (IFFT) operation and a cyclic prefix (CP) insertion. Further, if data reception is performed, the baseband processor 15-20 divides the baseband signal provided from the RF processor 15-10 in units of OFDM symbols, reconstructs the signals mapped to the subcarriers through a fast Fourier transform (FFT) operation, and then reconstructs a reception bit stream through demodulation and decoding.

The baseband processor 15-20 and the RF processor 15-10 transmit and receive signals as described above. Accordingly, the baseband processor 15-20 and the RF processor 15-10 may be referred to as a transmitter, a receiver, a transceiver, or a communication unit. Furthermore, at least one of the baseband processor 15-20 and the RF processor 15-10 may include a plurality of communication modules to support different radio access technologies. In addition, at least one of the baseband processor 15-20 and the RF processor 15-10 may include different communication modules to process signals of different frequency bands. For example, the different radio access technologies may include a wireless LAN (e.g., IEEE 802.11), a cellular network (e.g., LTE), and the like. Further, the different frequency bands may include a super high frequency (SHF) (e.g., 2.NRHz and NRhz) band and a millimeter (mm) wave (e.g., 60 GHz) band.

The storage 15-30 stores data, such as a basic program, an application, and configuration information for the operation of the UE. In particular, the storage 15-30 may store information related to a second access node in which wireless communication is performed using a second wireless access technology. The storage 15-30 provides stored data at the request of the controller 15-40.

The controller 15-40 controls the overall operation of the UE. For example, the controller 15-40 transmits or receives a signal through the baseband processor 15-20 and the RF processor 15-10. In addition, the controller 15-40 records and reads data in and from the storage 15-40. To this end, the controller 15-40 may include at least one processor. For example, the controller 15-40 may include a communication processor (CP) for performing control for communication and an application processor (AP) for controlling a higher layer such as an application.

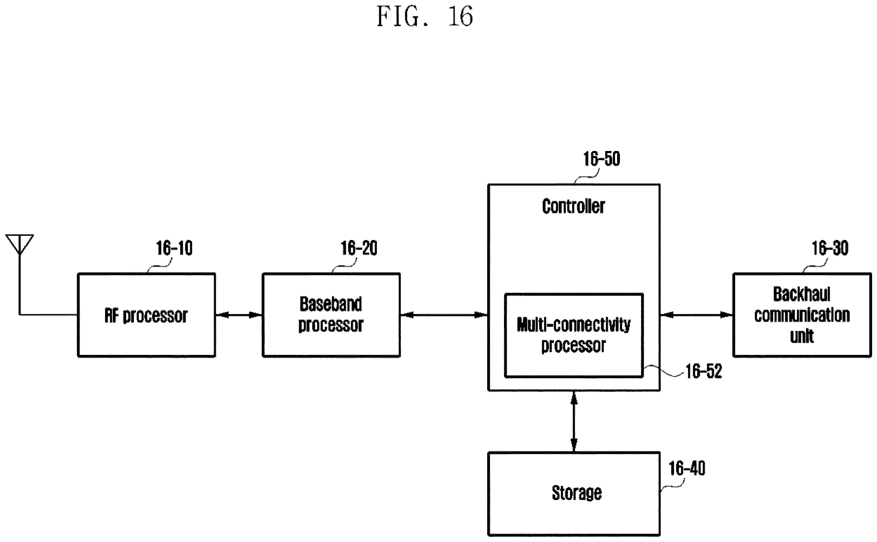

FIG. 16 is a block diagram illustrating a structure of a base station according to an embodiment of the disclosure.

As shown in FIG. 16, the base station includes an RF processor 16-10, a baseband processor 16-20, a backhaul communication unit 16-30, a storage 16-40, and a controller 16-50.

The RF processor 16-10 performs a function for transmitting or receiving a signal through a radio channel, such as band conversion and amplification of a signal. That is, the RF processor 16-10 up-converts a baseband signal provided from the baseband processor 16-20 into an RF band signal and then transmits the converted signal through an antenna, and down-converts an RF band signal received through the antenna into a baseband signal. For example, the RF processor 16-10 may include a transmission filter, a reception filter, an amplifier, a mixer, an oscillator, a DAC, an ADC, and the like. In the drawing, only one antenna is illustrated, but the first access node may include a plurality of antennas. In addition, the RF processor 16-10 may include a plurality of RF chains. In addition, the RF processor 16-10 may perform beamforming. In order to perform the beamforming, the RF processor 16-10 may control the phase and size of each of the signals transmitted or received through multiple antennas or antenna elements. The RF processor may perform a downlink MIMO operation by transmitting one or more layers.

The baseband processor 16-20 performs a function of conversion between the baseband signal and the bit string according to the physical layer standard of the first radio access technology. For example, if data transmission is performed, the baseband processor 16-20 generates complex symbols by encoding and modulating a transmission bit stream. In addition, if data reception is performed, the baseband processor 16-20 reconstructs the received bit string by demodulating and decoding the baseband signal provided from the RF processor 16-10. For example, in case of an OFDM scheme, if data transmission is performed, the baseband processor 16-20 may generate complex symbols by encoding and modulating the transmission bit stream, map the complex symbols to subcarriers, and then constitute OFDM symbols through an IFFT operation and CP insertion. In addition, if data reception is performed, the baseband processor 16-20 divides the baseband signal provided from the RF processor 16-10 in units of OFDM symbols, reconstructs the signals mapped to the subcarriers through an FFT operation, and then reconstructs a reception bit stream through demodulation and decoding. The baseband processor 16-20 and the RF processor 16-10 transmit and receive signals as described above. Accordingly, each of the baseband processor 16-20 and the RF processor 16-10 may be referred to as a transmitter, a receiver, a transceiver, a communication unit, or a wireless communication unit.

The backhaul communication unit 16-30 provides an interface for communicating with other nodes in the network. That is, the backhaul communication unit 16-30 converts a bit stream transmitted from the main station to another node, for example, an auxiliary base station, a core network, and the like, into a physical signal, and converts the physical signal, received from the other node, into a bit stream.

The storage 16-40 stores data, such as a basic program, an application, and configuration information for the operation of a main base station. In particular, the storage 16-40 may store information on a bearer allocated to a connected UE, a measurement result reported from the connected UE, and the like. In addition, the storage 16-40 may store information that is a criterion for determining whether to provide or terminate multiple connections to the UE. The storage 16-40 provides stored data at the request of the controller 16-50.

The controller 16-50 controls the overall operation of the main base station. For example, the controller 16-50 transmits or receives a signal through the baseband processor 16-20 and the RF processor 16-10 or through a backhaul communication unit 16-30. In addition, the controller 16-50 records and reads data in and from the storage 16-40. To this end, the controller 16-50 may include at least one processor.

The methods provided in the disclosure may be carried out in combination with some or all of the contents included in each embodiment while not impairing the subject matter of the disclosure.

The embodiments of the disclosure described with reference to the present specification and the drawings are merely illustrative of specific examples to easily facilitate description and understanding of the disclosure, and are not intended to limit the scope of the disclosure. In other words, it will be apparent to one of ordinary skill in the art that other modifications based on the technical ideas of the disclosure are feasible.

Also, although preferred embodiments of the disclosure are set forth in the present specification and drawings and specific terms are used herein, they are merely provided in a general sense to easily explain the technical idea of the disclosure and help understanding of the disclosure and are not intended to limit the scope of the disclosure. It will be obvious to those of ordinary skill in the art that other modified examples based on the technical spirit of the disclosure can be implemented.

## Claims

1. A method of a terminal in a communication system, comprising:
receiving, from a first base station associated with a first radio access technology (RAT), logged measurement configuration information, wherein the logged measurement configuration information includes an indicator indicating signalling-based logged measurement;
receiving a radio resource control (RRC) release message from the first base station;
entering an RRC idle state or RRC inactive state based on the RRC release message;
performing logging of measurement result during the RRC idle state or RRC inactive state, based on the logged measurement configuration information;
performing cell reselection during the RRC idle state or RRC inactive state;
performing an RRC connection procedure with a second base station in case where a cell of the second base station associated with a second RAT is selected according to the cell reselection; and
transmitting an RRC message indicating completion of the RRC connection procedure to the second base station,
wherein the RRC message includes an indicator associated to override protection of the signalling-based logged measurement.

2. The method of claim 1, wherein the indicator associated to override protection of the signalling-based logged measurement is an indicator indicating if the override protection of the signalling-based logged measurements is required; an indicator indicating if the signalling-based logged measurement has been configured by other RAT; an indicator indicating if it is allowed to configure other signalling-based logged measurement; or an indicator indicating if minimization of drive test (MDT) configuration is not allowed.

3. The method of claim 2, wherein the logged measurement configuration information further includes priority information for each RAT,
the indicator associated to override protection of the signalling-based logged measurement is identified based on at least one of the indicator indicating the signalling-based logged measurement or the priority information for each RAT,
the RRC message is an RRC setup complete message or an RRC resume complete message.

4. The method of claim 1, wherein the first RAT and the second RAT are different from each other.

5. A method of a base station in a communication system, comprising:
performing a radio resource control (RRC) connection procedure with a terminal that has performed cell reselection;
receiving, from the terminal, a RRC message indicating a completion of the RRC connection procedure, wherein the RRC message includes an indicator associated with override protection of signalling-based logged measurement configured by a first radio access technology (RAT); and
determining whether to transmit logged measurement configuration information to the terminal based on the indicator,
wherein the base station is associated with a second RAT.

6. The method of claim 5, wherein the indicator associated to override protection of the signalling-based logged measurement is an indicator indicating if the override protection of the signalling-based logged measurements is required; an indicator indicating if the signalling-based logged measurement has been configured by other RAT; an indicator indicating if it is allowed to configure other signalling-based logged measurement; or an indicator indicating if minimization of drive test (MDT) configuration is not allowed.

7. The method of claim 5, wherein the first RAT and the second RAT are different from each other,
the RRC message is an RRC setup complete message or an RRC resume complete message.

8. A terminal in a communication system, comprising:
a transceiver; and
a controller coupled with the transceiver, wherein the controller is configured to:
receive, from a first base station associated with a first radio access technology (RAT), logged measurement configuration information, wherein the logged measurement configuration information includes an indicator indicating signalling-based logged measurement,
receive a radio resource control (RRC) release message from the first base station,
enter an RRC idle state or RRC inactive state based on the RRC release message,
perform logging of measurement result during the RRC idle state or RRC inactive state, based on the logged measurement configuration information,
perform cell reselection during the RRC idle state or RRC inactive state,
performing an RRC connection procedure with a second base station in case where a cell of the second base station associated with a second RAT is selected according to the cell reselection, and
transmitting an RRC message indicating completion of the RRC connection procedure to the second base station,
wherein the RRC message includes an indicator associated to override protection of the signalling-based logged measurement.

9. The terminal of claim 8, wherein the indicator associated to override protection of the signalling-based logged measurement is an indicator indicating if the override protection of the signalling-based logged measurements is required; an indicator indicating if the signalling-based logged measurement has been configured by other RAT; an indicator indicating if it is allowed to configure other signalling-based logged measurement; or an indicator indicating if minimization of drive test (MDT) configuration is not allowed.

10. The terminal of claim 9, wherein the logged measurement configuration information further includes priority information for each RAT,
the indicator associated to override protection of the signalling-based logged measurement is identified based on at least one of the indicator indicating the signalling-based logged measurement or the priority information for each RAT,
the RRC message is an RRC setup complete message or an RRC resume complete message.

11. The terminal of claim 8, wherein the first RAT and the second RAT are different from each other.

12. A base station in a communication system, comprising:
a transceiver; and
a controller coupled with the transceiver, wherein the controller is configured to:
perform a radio resource control (RRC) connection procedure with a terminal that has performed cell reselection,
receive, from the terminal, a RRC message indicating a completion of the RRC connection procedure, wherein the RRC message includes an indicator associated with override protection of signalling-based logged measurement configured by a first radio access technology (RAT), and
determine whether to transmit logged measurement configuration information to the terminal based on the indicator,
wherein the base station is associated with a second RAT.

13. The base station of claim 12, wherein the indicator associated to override protection of the signalling-based logged measurement is an indicator indicating if the override protection of the signalling-based logged measurements is required; an indicator indicating if the signalling-based logged measurement has been configured by other RAT; an indicator indicating if it is allowed to configure other signalling-based logged measurement; or an indicator indicating if minimization of drive test (MDT) configuration is not allowed.

14. The base station of claim 12, wherein the first RAT and the second RAT are different from each other,
the RRC message is an RRC setup complete message or an RRC resume complete message.
